Europäisches Patentamt

(19) European Patent Office

Office européen des brevets

(11) Publication number: **0 081 970**
**A2**

(12) # EUROPEAN PATENT APPLICATION

(21) Application number: **82306530.5**

(22) Date of filing: **08.12.82**

(51) Int. Cl.³: **A 23 K 1/00, A 23 K 1/16**

(30) Priority: **11.12.81 GB 8137528**

(43) Date of publication of application: **22.06.83**
**Bulletin 83/25**

(84) Designated Contracting States: **BE DE FR GB NL SE**

(71) Applicant: **BP Chemicals Limited, Belgrave House 76 Buckingham Palace Road, London, SW1W 0SU (GB)**

(72) Inventor: **Dunn, Michael, BP CHEMICALS LIMITED Saltend, Hedon Hull, HU12 8DS (GB)**
Inventor: **Parker, David Andrew, BP CHEMICALS LIMITED Saltend, Hedon Hull, HU12 8DS (GB)**

(74) Representative: **Harry, John et al, BP INTERNATIONAL LIMITED Patents and Licensing Division Chertsey Road, Sunbury-on-Thames Middlesex TW16 7LN (GB)**

(54) **Waste yeast as feed supplement.**

(57) This invention relates to a feed supplement for monogastric animals comprising liquid brewers' yeast containing from 0.5 to 4% by weight based on the liquid brewers' yeast of an added acid formate salt in which the formate anion to cation ratio is between 2:1 and 4:1 on a chemical equivalent basis. The cations are preferably one of ammonium, sodium, potassium and calcium. The acid formates used in the present invention reduce the duration of yeast deactivation from 72 hours for propionic acid to two hours.

EP 0 081 970 A2

1

## WASTE YEAST AS FEED SUPPLEMENT

The present invention relates to the use of waste yeast, especially the liquid by-products containing such yeast from breweries as a feed supplement for monogastric animals.

It is well known in the art that unboiled brewers' yeast is rich in digestible proteins, minerals and vitamins. Brewers' yeast compares favourably with soyabean bran and potatoes in respect of its nutritional value. Although such yeast has been used as a protein supplement in normal rations rich in corn silage and cereal grains for monogastric animals there have been problems. For example, pigs fed with untreated brewers' yeast have been susceptible to diarrhoea and gastroenteritis due to fermentation of the yeast in the stomach after ingestion. Moreover, the metabolism of the monogastric animals is such that they are less able to assimilate the nutrients and vitamins from yeast containing living cells than from boiled yeast in which the cells are dead or are unviable. However, the process of boiling causes coagulation of proteins and thereby reduces the digestibility of the nutrients and hence the nutritional value of the yeast. Boiling brewers' yeast is also uneconomic in terms of heat energy required and the capital costs involved. The economic factors are particularly significant when considering the utilisation of waste yeast by-products from the brewing industry.

During the brewing of beer, for example, liquid brewers' yeast containing between 5 and 28% by weight of solids is generated as byproduct. Such liquid brewers' yeast contains a large amount of water. Traditionally, the liquid brewers' yeast has been discharged

1

as an effluent from the brewery. This not only represents a loss of a valuable source of nutrients but adds considerably to the problems of biological oxygen demand and suspended solids in the effluent disposal system. In recent years, efforts have been made to solve these problems. For instance, British Patent specification No. 1582397 (BASF) describes a feed supplement in which a lower monocarboxylic acid, particularly propionic acid, is mixed with the liquid brewers' yeast to kill the cells without boiling and the mixture is fed to monogastric animals.

By this method the harmful microorganisms in the yeast are destroyed and the nutrients are made easily digestible. However, the process is slow because mixing the liquid brewers' yeast with propionic acid at a level of 1% w/w reduces the amount of surviving cells to below 0.01% only after a period of 72 hours i.e. 3 days.

It has now been found that this duration of treatment can be reduced considerably by using a specific type of additive.

Accordingly, the present invention is a feed supplement for monogastric animals comprising liquid brewers' yeast containing from 0.5 to 4% by weight based on the liquid brewers' yeast of an added acid formate salt in which the formate anion to cation ratio is between 2:1 and 4:1 on a chemical equivalent basis.

By "liquid brewers' yeast" is meant here and throughout the specification the conventional effluents from breweries including both suspensions containing from 5 to 15% by weight of solids and pressed yeast containing between 22 and 28% by weight of solids.

The amount of acid formate salt i.e. 0.5 to 4% by weight specified is based on the liquid brewers' yeast containing either between 5 and 25% by weight of solids and water or pressed yeast containing between 22 and 28% by weight of solids slurried in water.

The acid formate salt may be mixed with the liquid brewers' yeast either as such or in the form of an aqueous solution thereof.

The cation component of the acid formate salt may be ammonium or a cation derived from a metal selected from Group I or Group II of the Periodic Table due to Mendeleef. Examples of such acid formate salts in aqueous solution are claimed and described in our published British patent No. 1505388.

2

0081970

Acid formate salts of ammonium, sodium, potassium and calcium are particularly preferred.

The present invention is further illustrated with reference to the following Examples and Comparative Tests:

Example and Comparative Test

Pressed yeast (solids content approximately 26% w/w) was slurried to approximately 13% w/w solids by the addition of sterile distilled water followed by mixing in a Stomacher blender. 200g samples of this slurry were treated with propionic acid, aqueous solution of sodium dipropionate (70% w/w) and ammonium tetraformate solution (approximately 70% w/w) at a treatment rate of 1% w/w. A further 200g sample was used as control without treatment with any additive. After treatment (or without the treatment in the case of the control test) the samples were thoroughly mixed in the Stomacher for 5 minutes. Aliquots were withdrawn at various intervals for performing total viable counts. The yeast slurry was mixed for 2 minutes prior to sampling to avoid false results caused by sedimentation. Samples were left at ambient temperature.

Total viable counts were performed by pour plates using malt extract agar (Difco) which had been supplemented with additional agar (Difco) to increase the agar concentration to 2% w/w. All plates were incubated at 30°C for 3 days.

The results are presented in the Table below.

From the above results it is clear that acid formate salts act much more rapidly than propionic acid on yeast cells. This gives greater flexibility in that if a storage time of 3 days is desired for liquid brewers' yeast prior to feeding to the monogastric animals, a much lower concentration of the acid formate salt can be used.

## TABLE

| Treatment | Time (hours) | Total Viable Count | % Survivors | pH of yeast slurry |
|---|---|---|---|---|
| Control* | 0 | $1.4 \times 10^7$ | | 4.3 (after 4h) |
| | 24 | $1.2 \times 10^7$ | 85.7 | |
| | 48 | $7 \times 10^6$ | 50.0 | |
| | 72 | $6.4 \times 10^6$ | 45.7 | |
| | 96 | $5 \times 10^6$ | 35.7 | |
| Sodium dipropionate* | 2 | $8.8 \times 10^6$ | 62.9 | |
| | 4 | $6.9 \times 10^6$ | 49.3 | 4.5 |
| | 24 | $5.5 \times 10^6$ | 39.3 | |
| | 48 | $3.7 \times 10^6$ | 26.4 | |
| | 75 | $2.7 \times 10^6$ | 13.6 | |
| Propionic acid* | 2 | $1.4 \times 10^6$ | 10.0 | |
| | 4 | $1.7 \times 10^6$ | 12.1 | 3.7 |
| | 24 | $5.2 \times 10^4$ | 0.38 | |
| | 48 | $8.4 \times 10^3$ | 0.06 | |
| | 72 | $1 \times 10^3$ | 0.01 | |
| Ammonium tetraformate | 2 | $1 \times 10^3$ | 0.01 | |
| | 4 | $1 \times 10^3$ | 0.01 | 3.8 |
| | 24 | $1 \times 10^3$ | 0.01 | |

* Comparative Tests

0081970

Claims:

1. A feed supplement for monogastric animals comprising liquid brewers' yeast containing from 0.5 to 4% by weight based on the liquid brewers' yeast of an added acid formate salt in which the formate anion to cation ratio is between 2:1 and 4:1 on a chemical equivalent basis.

2. A feed supplement according to claim 1 wherein the acid formate salt is mixed with the liquid brewers' yeast as such or in the form of an aqueous solution thereof.

3. A feed supplement according to claim 1 wherein the cation component of the acid formate salt is ammonium or a cation derived from a metal selected from Group I or Group II of the Periodic Table due to Mendeleef.

4. A feed supplement according to claim 2 wherein the cation component of the acid formate salt is ammonium or a cation derived from a metal selected from Group I or Group II of the Periodic Table due to Mendeleef.

5. A feed supplement according to claim 3 wherein the Group I or Group II metal cation is selected from sodium, potassium and calcium.

6. A feed supplement according to claim 4 wherein the Group I or Group II metal cation is selected from sodium, potassium and calcium.